# EUROPEAN PATENT SPECIFICATION

(11) **EP 4 308 341 B1**
(45) Date of publication and mention of the grant of the patent: **01.07.2026**
(21) Application number: 22715703.9
(22) Date of filing: 14.03.2022
(51) Int. Cl.: B23Q 7/04, B23B 13/02

(54) **APPARATUS FOR THE AUTOMATIC FEEDING OF BARS TO A MACHINE TOOL, WITH ELECTROMECHANICALLY-OPERATED DEVICE FOR LOCKING THE BARS**
VORRICHTUNG FÜR DIE AUTOMATISCHE VERSORGUNG VON STANGEN IN EINE WERKZEUGMASCHINE, MIT ELEKTROMECHANISCHER VORRICHTUNG ZUR EINSPANNUNG DER STANGEN
DISPOSITIF POUR LE RAVITAILLEMENT DE BARRES VERS UNE MACHINE-OUTIL, AVEC APPAREIL ELECTROMECANIQUE POUR LE SERRAGE DES BARRES

(30) Priority: 16.03.2021 IT 202100006275
(43) Date of publication of application: 24.01.2024
(73) Proprietor: CO.RA. 2000 S.r.l., 20900 Monza MB (IT)
(72) Inventor: CORTECCHIA, Francesco, 48018 Faenza RA (IT)
(74) Representative: Rondano, Davide
(86) International application number: PCT/IB2022/052271
(87) International publication number: WO 2022/195447

(56) References cited:
- FR-A1- 2 425 907
- US-A- 3 612 298

## Description

### Technical field of the invention

The present invention relates generally to an apparatus for the automatic feeding of bars to a machine tool, such as a lathe.

### State of the art

The apparatuses for the automatic feeding of bars to machine tools typically comprise a feeding area which extends longitudinally and is configured to accommodate at each time a bar to be fed to the machine tool, a bar pushing device configured to push the bar positioned in the feeding area towards the machine tool in a horizontal feed direction, and a bar locking device arranged to lock a bar positioned in the feeding area, when the bar has to be taken up by the bar pushing device, or to lock a bar section coming from the machine tool, as a waste of the bar processing, in order to allow the bar section to be removed from the bar pushing device and subsequently unloaded into a suitable waste container.

The locking device must be capable of clocking bars of different diameters, generally from a minimum of 1-1,5 mm. It is therefore known to use a locking device comprising knife clamping members that can be moved closer to or further away from each other, so that bars of different diameters can be clamped, and a pneumatic linear actuator arranged to control the relative movement of the clamping members between a closed condition, or clamping condition, where the clamping members engage the bar (or the bar section) to keep it locked in position, and an open condition, where the clamping members disengage from the bar (or the bar section). The use of a pneumatically-operated locking device obviously requires a compressed air source and a compressed air supply circuit to supply the linear actuator with compressed air, which involves an increase in the costs related both to the operation and to the maintenance of the apparatus. An apparatus for the automatic feeding of bars to a machine tool is known for example from FR 2 425 907 A1 and from US 3 612 298 A. FR 2 425 907 A1, which is considered the closest prior art, discloses an apparatus for the automatic feeding of bars to a machine tool, comprising a bar pushing device for pushing each time a bar to be fed to the machine tool in an horizontal feed direction, a locking device for locking in position the bar to be fed to the machine tool in order to allow it to be taken over by the bar pushing device, said locking device comprising a lower oscillating arm and an upper oscillating arm rotatably supported for rotation about respective horizontal axes of rotation, oriented parallel to each other and perpendicular to said feed direction , as well as a pair of lower and upper clamping members, each of which has at least one seat suitable for accommodating the bar and which are carried by the lower oscillating arm and the upper oscillating arm, respectively, so as to be movable with respect to each other between an open condition, in which they do not engage the bar, and a closed condition, in which they engage the bar locking it in position, and an actuation system arranged to drive the lower and upper oscillating arms into rotation in opposite directions about their respective axes of rotation in such a way as to cause each time the lower and upper clamping members to move towards or away from each other, said actuation system comprising a linear motor and motion transmission and conversion means interposed between the motor and the lower and upper oscillating arms.

### Summary of the invention

It is therefore an object of the present invention to provide an apparatus for the automatic feeding of bars to a machine tool comprising a locking device which is not pneumatically operated, and therefore does not require a compressed air source for its operation, but is still capable of operating with bars of different transverse sizes.

This and other objects are fully achieved according to the present invention by virtue of an apparatus for the automatic feeding of bars to a machine tool having the features defined in the appended independent claim 1.

Preferred embodiments of the apparatus according to the present invention are defined in the dependent claims, the subject-matter of which is intended to form an integral part of the following description.

In summary, the invention is based on the idea of providing an apparatus in which the locking device comprises a lower oscillating arm and an upper oscillating arm which are rotatably supported for rotation about respective horizontal axes of rotation, as well as a pair of clamping members, that is, a lower clamping member and an upper clamping member, respectively, each of which has at least one substantially V-shaped seat suitable for accommodating the bar and which are carried by the lower oscillating arm and the upper oscillating arm, respectively, in such a way as to be movable relative to each other between an open condition, where they do not engage the bar, and a closed condition, where they engage the bar, locking it in position, and in which the oscillating arms are driven into rotation in opposite directions about their respective axes of rotation, so as to cause each time the clamping members to move towards each other, or away from each other, between said open condition and said closed condition, by an electromechanical actuation system comprising an electric motor and motion transmission and conversion means interposed between the electric motor and the oscillating arms.

Thanks to such a configuration, the apparatus according to the present invention is able to lock bars of different transverse sizes, during the phases of gripping of the bar by the bar pushing device and of extraction of the bar section from the bar pushing device, using only an electric motor as power source, and therefore without requiring the use of a compressed air source. Further features and advantages of the present invention will be apparent from the following detailed description, given purely by way of non-limiting example.

### Brief description of the drawings

In the following detailed description of the invention, reference will be made to the figures of the accompanying drawings, wherein:
- Figure 1 shows the locking device of an apparatus for the automatic feeding of bars to a machine tool according to an embodiment of the present invention, with the locking device in the open condition;
- Figure 2 shows in detail the clamping members of the locking device of Figure 1, with the locking device in the closed condition;
- Figure 3 shows the entire electromechanical actuation system of the locking device of Figure 1, with the locking device in the open condition;
- Figure 4 shows in detail part of the electromechanical actuation system of Figure 3; and
- Figures 5 and 6 show detail another part of the electromechanical actuation system of Figure 3.

### Detailed description

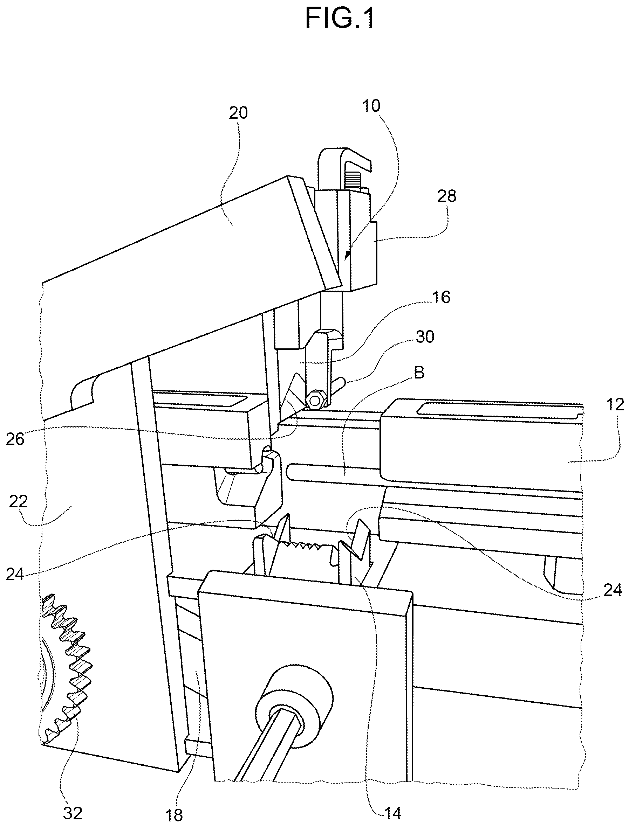

With reference first to Figure 1, a locking device forming part of an apparatus for the automatic feeding of bars (hereinafter simply referred to as "apparatus") designed to automatically feed each time a semi-finished product B of metallic material in the form of a bar (hereinafter simply referred to as "bar") to a machine tool (not shown), such as for example a lathe, is indicated 10. In the following description, reference will be made to a bar B having a circular cross-section, but it is clear that the apparatus of the present invention is not limited to the use with bars having a circular cross-section, but can operate with bars having a different cross-section, for example bars having a square cross-section, a hexagonal cross-section, etc.

The function of the locking device 10 is to lock the bar B in position when it is placed in a guide structure 12 to allow a bar pushing device (not shown) to engage the bar in order to push it, along a feed direction coinciding with the longitudinal axis of the bar, towards the machine tool to be fed. Furthermore, the locking device 10 has the function of locking a bar section in position when the latter is brought back as a waste product of the machining by the machine tool, so as to allow the extraction of the bar section from the bar pushing device and the subsequent unloading of the bar section into a suitable waste container.

The attached figures show the case in which the locking device 10 is used to lock in position a bar section B which is brought back by the bar pushing device, at the end of the machining on the machine tool, to be deposited in the waste container. It is clear, however, that the following description also applies to the case of a new bar to be machined instead of a bar section.

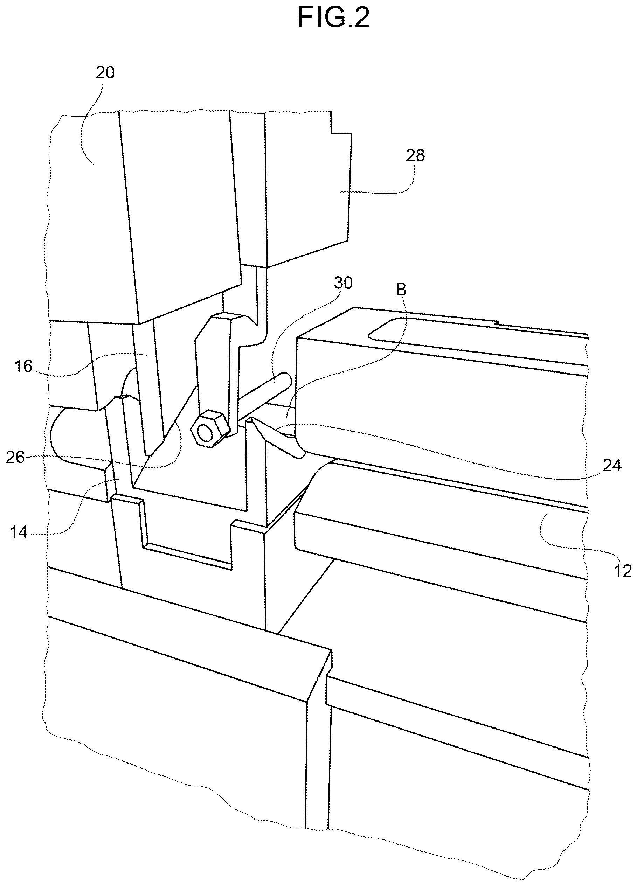

The locking device 10 comprises a pair of clamping members 14 and 16, namely a lower clamping member and an upper clamping member, respectively, which are movable relative to each other between an open condition (Figure 1), in which they do not engage the bar section B, and a closed condition (Figure 2), in which they engage the bar section B, locking it in position. The lower clamping member 14 is mounted at the free end of a lower oscillating arm 18, while the upper clamping member 16 is mounted at the free end of an upper oscillating arm 20 (only partially visible in Figure 1). The lower oscillating arm 18 and the upper oscillating arm 20 are rotatably supported by a first support structure 22 for rotation about respective horizontal axes of rotation x₁ and x₂, oriented parallel to each other and perpendicular to the aforementioned feed direction.

An electromechanical actuation system, which will be described in more detail below, is associated with the locking device 10 and is arranged to drive the oscillating arms 18 and 20 into rotation in opposite directions about the respective axes of rotation x₁ and x₂, so as to cause each time the clamping members 14 and 16 carried by them to move towards each other or away from each other.

With reference to Figures 1 and 2, the lower clamping member 14 has a pair of seats 24 which are arranged at a distance from each other along the feed direction and have a substantially V-like shape each extending in a respective vertical plane perpendicular to the feed direction. The upper clamping member 16 has a seat 26 which is arranged in an intermediate position along the feed direction with respect to the seats 24 of the lower clamping member 14 and also has a substantially V-like shape extending in a vertical plane perpendicular to the feed direction. However, the configuration of the lower clamping member 14 and the upper clamping member 16 might be reversed, in that the upper clamping member might have a pair of V-shaped seats, instead of just one, and the lower clamping member might have just one V-shaped seat, instead of a pair. Furthermore, the number of V-shaped seats of both the lower clamping member and the upper clamping member might be different from what is shown here.

As shown in Figure 2, in the closed condition of the locking device 10, the bar section B therefore remains firmly retained on one side in the seats 24 of the lower locking device 14 and on the other side in the seat 26 of the upper locking device 16. Due to the V-shaped configuration of the seats 24 and 26, the clamping members 14 and 16 are adaptable to bars B of different diameters (or, more generally, of different transverse sizes). As the diameter of the bar B increases or decreases, in fact, the distance between the two clamping members 14 and 16 in the closed condition of the locking device 10 will increase or decrease accordingly.

A contact sensor 28 provided with a touch probe 30 placed next to the upper clamping member 16 is also mounted on the upper oscillating arm 20. The contact sensor 28 is configured to emit a contact signal when the touch probe 30 comes into contact with the bar section B in the movement from the open condition to the closed condition of the locking device 10, as can be seen in Figure 2.

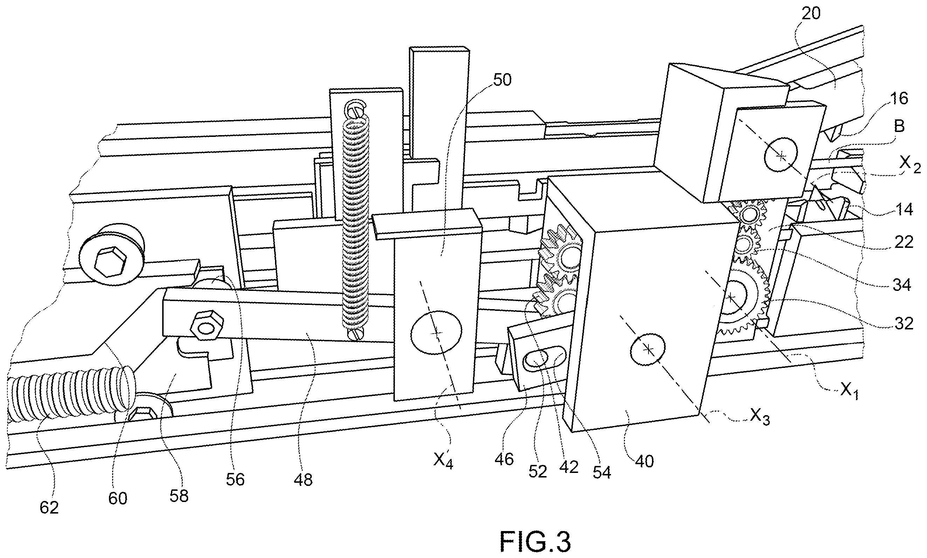

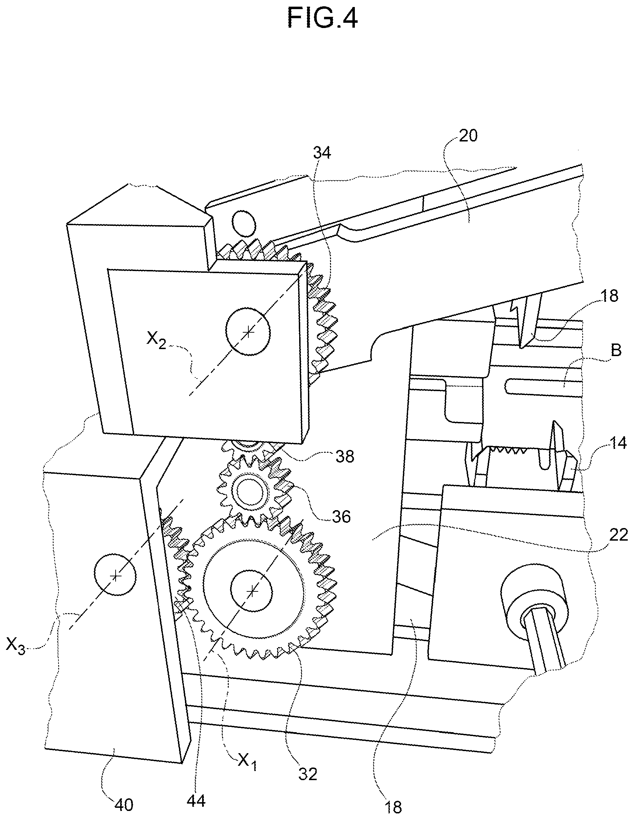

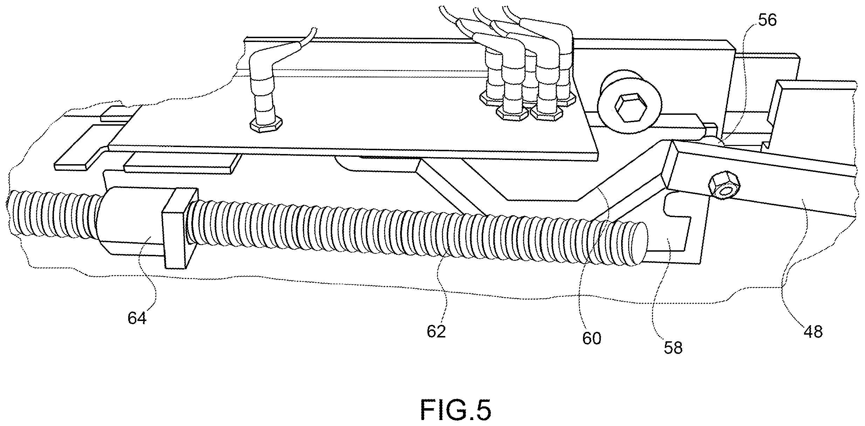

Referring now to Figures 3 to 6, the electromechanical actuation system for driving the oscillating arms 18 and 20 into rotation in opposite directions about the respective axes of rotation x₁ and x₂ basically comprises:
- a first gear set (Figure 4) carried by the first support structure 22 and including a first gear wheel 32 drivingly connected for rotation with the lower oscillating arm 18, a second gear wheel 34 drivingly connected for rotation with the upper oscillating arm 20, and a pair of intermediate gear wheels 36 and 38 interposed between the first gear wheel 32 and the second gear wheel 34 and meshing with each other, with the intermediate gear wheel 36 meshing also with the first gear wheel 32 and with the intermediate gear wheel 38 meshing also with the second gear wheel 34, in such a way that the first gear wheel 32 and the second gear wheel 34 rotate in opposite directions with respect to each other;
- a second gear set (Figures 3 and 4) carried by a second support structure 40 and including an input gear wheel 42 and an output gear wheel 44 meshing with the first gear wheel 32 of the first gear set;
- a lever mechanism (Figure 3) including a first oscillating lever 46, which is rotatably supported by the second support structure 40 for rotation about a horizontal axis of rotation x₃ parallel to the axes of rotation x₁ and x₂ and is connected for rotation with the input gear wheel 42 of the second gear set, and a second oscillating lever 48, which is rotatably supported by a third support structure 50 for rotation about a horizontal axis of rotation x₄ parallel to the axes of rotation x₁, x₂ and x₃, the first oscillating lever 46 and the second oscillating lever 48 being connected to each other at respective adjacent ends, in particular by engagement of a pin 52 secured to the end of the second oscillating lever 48 in a slot 54 provided at the end of the first oscillating lever 46, in such a way that the rotation of the second oscillating lever 48 in a given direction about the axis of rotation x₄ is converted into a rotation of the first oscillating lever 46 in the opposite direction about the axis of rotation x₃;
- a cam mechanism (Figures 4 to 6) comprising, as driven member, a roller 56 mounted at the end of the second oscillating lever 48 opposite to the one at which the pin 52 is mounted, and, as a driving member, a translating body 58 having a suitably shaped groove 60 in which the roller 56 engages, in such a way that the horizontal translational movement of the translating body 58 in one direction or the other is converted into a vertical movement of the roller 56, thereby causing the second oscillating lever 48 to rotate in one direction or the other;
- an electric motor (not shown, but nevertheless of a per-se-known type); and
- a motion conversion mechanism (Figure 5) for converting the rotary motion generated by the electric motor into a translational motion of the translating body 58, said motion conversion mechanism being configured, in the proposed embodiment, as a screw and nut mechanism and comprising a screw 62 driven into rotation by the electric motor and a nut 64 meshing with the screw 62 and drivingly connected for translation with the translating body 58.

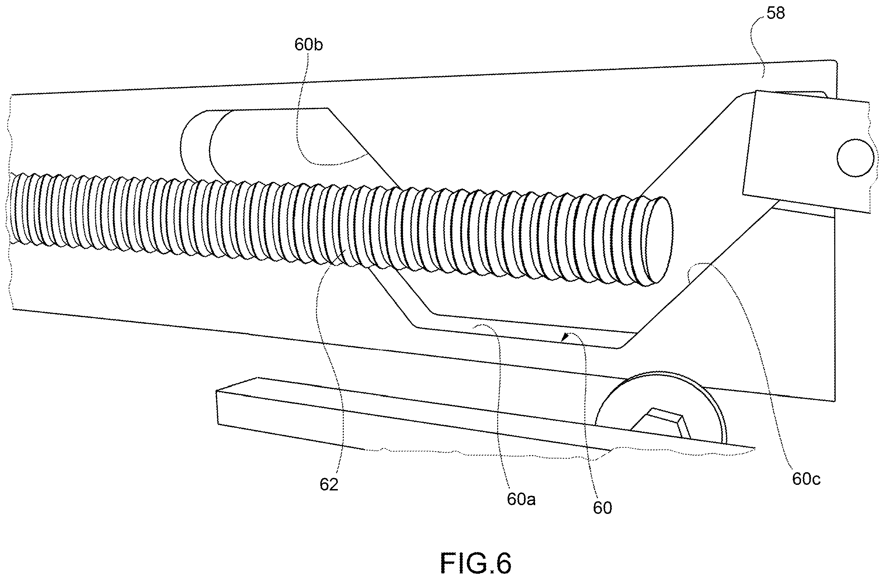

With reference in particular to Figure 6, the groove 60 of the translating body 58 of the cam mechanism has a horizontal straight section 60a, placed at a lower height with respect to the axis of rotation x₄ of the second oscillating lever 48, a first inclined straight section 60b, placed upstream of the horizontal straight section 60a (i.e. on the side facing the electric motor) and extending from a higher height with respect to the axis of rotation x₄ until it joins the horizontal straight section 60a, and a second inclined straight section 60c, placed downstream of the horizontal straight section 60a (i.e. on the side facing the second oscillating lever 48) and extending from the horizontal straight section 60a up to a higher height with respect to the axis of rotation x₄. In this way, when the roller 56 of the cam mechanism moves in one direction or the other along the first inclined straight section 60b, or likewise along the second inclined straight section 60c, of the groove 60 of the translating body 58, the second oscillating lever 48 rotates in one direction or the other about the axis of rotation x₄, thereby causing the first oscillating lever 46 to rotate in the opposite direction about the axis of rotation x₃. The rotation of the first oscillating lever 46, and hence, with it, of the input gear wheel 42 of the second gear set, about the axis of rotation x₃ causes the rotation of the output gear wheel 44 of the second gear set, and thus of the first gear wheel 32 of the first gear set, resulting in a rotation of the oscillating arms 18 and 20 in opposite directions about the respective axes of rotation x₁ and x₂ and thus in a movement of the clamping members 14 and 16 towards each other or away from each other (depending on the direction of rotation of the first gear wheel 32 of the first gear set). Preferably, a torque limiting coupling (not shown, but nevertheless of a per-se-known type) is interposed between the first oscillating lever 46 and the input gear wheel 42 of the second gear set to disconnect the first oscillating lever 46 from the input gear wheel 42 when a given value of the transmitted torque is exceeded. In this way, once the clamping members 14 and 16 come into contact with the bar section B, during the movement of the locking device 10 from the open condition to the closed condition, any further rotation of the first oscillating lever 46 driven by the electric motor through the cam mechanism and the lever mechanism does not result in further rotation of the input gear wheel 42, which would otherwise lead to overloading the first and second gear sets, as well as applying an excessive clamping force on the bar.

As is clear from the above description, in an apparatus for the automatic feeding of bars to a machine tool according to the present invention, the bars or bar sections are locked by a locking device under control of an electromechanical actuation system which uses an electric motor as the only power source, without therefore requiring a compressed air source, unlike the known apparatuses which, as mentioned above, use pneumatic actuation systems, and without therefore entailing the drawbacks, in terms of operating and maintenance costs, associated with the use of pneumatic actuation systems.

In addition, the locking device of the apparatus according to the invention is able to operate with bars of different diameters, without requiring, each time the diameter of the bars is changed, the use of specific locking devices for that particular diameter.

The present invention has been described herein with reference to a preferred embodiment thereof. It is to be understood that other embodiments sharing the same inventive core with the one described herein may be envisaged, as defined by the scope of protection of the accompanying claims.

## Claims

1. Apparatus for the automatic feeding of bars (B) to a machine tool, comprising a bar pushing device for pushing each time a bar (B) to be fed to the machine tool in a horizontal feed direction,
a locking device (10) for locking in position the bar (B) to be fed to the machine tool in order to allow it to be taken over by the bar pushing device, said locking device (10) comprising a lower oscillating arm (18) and an upper oscillating arm (20) rotatably supported for rotation about respective horizontal axes of rotation (x₁, x₂), oriented parallel to each other and perpendicular to said feed direction, as well as a pair of lower and upper clamping members (14, 16), each of which has at least one substantially V-shaped seat (24, 26) suitable for accommodating the bar (B) and which are carried by the lower oscillating arm (18) and the upper oscillating arm (20), respectively, so as to be movable with respect to each other between an open condition, in which they do not engage the bar (B), and a closed condition, in which they engage the bar (B) locking it in position, and
an actuation system arranged to drive the lower and upper oscillating arms (18, 20) into rotation in opposite directions about their respective axes of rotation (x₁, x₂) in such a way as to cause each time the lower and upper clamping members (14, 16) to move towards or away from each other, said actuation system comprising an electric motor and motion transmission and conversion means (32, 34, 38, 42, 44, 46, 48, 56, 58, 62, 64) interposed between the electric motor and the lower and upper oscillating arms (18, 20),
wherein said motion transmission and conversion means (32, 34, 38, 42, 44, 46, 48, 56, 58, 62, 64) comprises a first gear set (32, 34, 36, 38) including a first gear wheel (32) drivingly connected for rotation with said lower oscillating arm (18), a second gear wheel (34) drivingly connected for rotation with the upper oscillating arm (20), and a pair of intermediate gear wheels (36, 38) interposed between said first and second gear wheels (32, 34) and meshing with each other, in such a way that said first and second gear wheels (32, 34) are constrained to rotate in opposite directions with respect to each other.

2. Apparatus according to claim 1, wherein said motion transmission and conversion means (32, 34, 38, 42, 44, 46, 48, 56, 58, 62, 64) further comprise a second gear set (42, 44) including an input gear wheel (42) and an output gear wheel (44) meshing with said first gear wheel (32) of said first gear set (32, 34, 36, 38).

3. Apparatus according to claim 2, wherein said motion transmission and conversion means (32, 34, 38, 42, 44, 46, 48, 56, 58, 62, 64) further comprise a lever mechanism (46, 48) including a first oscillating lever (46), which is rotatably supported for rotation about a horizontal axis of rotation (x₃) parallel to the axes of rotation (x₁, x₂) of the lower and upper oscillating arms (18, 20) and is connected for rotation with the input gear wheel (42) of said second gear set (42, 44), and a second oscillating lever (48), which is rotatably supported for rotation about a horizontal axis of rotation (x₄) parallel to the axes of rotation (x₁, x₂) of the lower and upper oscillating arms (18, 20), said first and second oscillating levers (46, 48) being connected (52, 54) to each other at respective adjacent ends, in such a way that a rotation of said second oscillating lever (48) in a given direction about the respective axis of rotation (x₄) is converted into a rotation of said first oscillating lever (46) in the opposite direction about the respective axis of rotation (x₃).

4. Apparatus according to claim 3, wherein said motion transmission and conversion means (32, 34, 38, 42, 44, 46, 48, 56, 58, 62, 64) further comprise a cam mechanism (56, 58) comprising, as driven member, a roller (56) mounted at an end of said second oscillating lever (48) opposite to the one connected to said first oscillating lever (46), and, as driving member, a translating body (58) having a suitably shaped groove (60) in which the roller (56) engages, in such a way that the horizontal translational movement of the translating body (58) in one direction or the other is converted into a vertical movement of the roller (56), thus causing the rotation of said second oscillating lever (48) in one direction or the other.

5. Apparatus according to claim 4, wherein said motion transmission and conversion means (32, 34, 38, 42, 44, 46, 48, 56, 58, 62, 64) further comprise a motion conversion mechanism (62, 64) for converting the rotary motion of the electric motor into a translational motion, in particular in a direction parallel to said feed direction, of the translating body (58).

6. Apparatus according to claim 5, wherein said motion conversion mechanism (62, 64) comprises a screw (62) driven into rotation by the electric motor and a nut (64) meshing with the screw (62) and drivingly connected for translation with the translating body (58).

7. Apparatus according to any one of the preceding claims, wherein the lower clamping member (14) has a pair (24) of said substantially V-shaped seats (24, 26), which are arranged at a distance from each other along said feed direction, and wherein the upper clamping member (16) has one (26) of said substantially V-shaped seats (24, 26), which is arranged in an intermediate position, along said feed direction, with respect to the seats (24) of the lower clamping member (14).

## Patentansprüche

1. Vorrichtung für die automatische Zuführung von Stangen (B) zu einer Werkzeugmaschine, umfassend
eine Stangenschiebevorrichtung zum Schieben einer Stange (B), die der Werkzeugmaschine zuzuführen ist, jedes Mal in einer horizontalen Zuführrichtung,
eine Verriegelungsvorrichtung (10) zum Verriegeln der Stange (B), die der Werkzeugmaschine zuzuführen ist, in einer Position, um zu ermöglichen, dass sie durch die Stangenschubvorrichtung übernommen wird, die Verriegelungsvorrichtung (10) umfassend einen unteren Schwingarm (18) und einen oberen Schwingarm (20), die für eine Drehung um jeweilige horizontale Drehachsen (x₁, x₂) drehbar gelagert sind, die parallel zueinander und senkrecht zu der Zuführrichtung orientiert sind, sowie ein Paar von einem unteren und einem oberen Klemmelement (14, 16), die jeweils mindestens einen im Wesentlichen V-förmigen Sitz (24, 26) aufweisen, der zum Aufnehmen der Stange (B) geeignet ist, und die durch den unteren Schwingarm (18) beziehungsweise den oberen Schwingarm (20) getragen werden, um zwischen einem offenen Zustand, in dem sie die Stange (B) nicht in Eingriff nehmen, und einem geschlossenen Zustand, in dem sie die Stange (B) in Eingriff nehmen und in der Position verriegeln, relativ zueinander bewegbar zu sein, und
ein Betätigungssystem, das eingerichtet ist, um den unteren und den oberen Schwingarm (18, 20) in entgegengesetzte Richtungen um ihre jeweiligen Drehachsen (x₁, x₂) in einer derartigen Weise anzutreiben, dass das untere und das obere Klemmelement (14, 16) jedes Mal dazu veranlasst werden, sich aufeinander zu oder voneinander weg zu bewegen, das Betätigungssystem umfassend einen Elektromotor und Bewegungsübertragungs- und -umwandlungsmittel (32, 34, 38, 42, 44, 46, 48, 56, 58, 62, 64), die zwischen dem Elektromotor und dem unteren und dem oberen Schwingarm (18, 20) angeordnet sind,
wobei die Bewegungsübertragungs- und -umwandlungsmittel (32, 34, 38, 42, 44, 46, 48, 56, 58, 62, 64) einen ersten Zahnradsatz (32, 34, 36, 38) umfassen, einschließlich eines ersten Zahnrads (32), das für die Drehung mit dem unteren Schwingarm (18) antreibend verbunden ist, eines zweiten Zahnrads (34), das für die Drehung mit dem oberen Schwingarm (20) antreibend verbunden ist, und eines Paars von Zwischenzahnrädern (36, 38), die zwischen dem ersten und dem zweiten Zahnrad (32, 34) angeordnet sind und miteinander in einer derartigen Weise kämmen, dass das erste und das zweite Zahnrad (32, 34) dazu gezwungen sind, sich in entgegengesetzten Richtungen in Bezug aufeinander zu drehen.

2. Vorrichtung nach Anspruch 1, wobei die Bewegungsübertragungs- und -umwandlungsmittel (32, 34, 38, 42, 44, 46, 48, 56, 58, 62, 64) ferner einen zweiten Zahnradsatz (42, 44) umfassen, einschließlich eines Eingangszahnrads (42) und eines Ausgangszahnrads (44), die mit dem ersten Zahnrad (32) des ersten Zahnradsatzes (32, 34, 36, 38) kämmen.

3. Vorrichtung nach Anspruch 2, wobei die Bewegungsübertragungs- und -umwandlungsmittel (32, 34, 38, 42, 44, 46, 48, 56, 58, 62, 64) ferner einen Hebelmechanismus (46, 48) umfassen, einschließlich eines ersten Schwinghebels (46), der für die Drehung um eine horizontale Drehachse (x₃) herum parallel zu den Drehachsen (x₁, x₂) des unteren und des oberen Schwingarms (18, 20) drehbar gelagert ist und für die Drehung mit dem Eingangszahnrad (42) des zweiten Zahnradsatzes (42, 44) verbunden ist, und eines zweiten Schwinghebels (48), der für die Drehung um eine horizontale Drehachse (x₄) herum parallel zu den Drehachsen (x₁, x₂) des unteren und des oberen Schwingarms (18, 20) drehbar gelagert ist, wobei der erste und der zweite Schwinghebel (46, 48) an jeweiligen angrenzenden Enden in einer derartigen Weise miteinander verbunden (52, 54) sind, dass eine Drehung des zweiten Schwinghebels (48) in einer gegebenen Richtung um die jeweilige Drehachse (x₄) herum in eine Drehung des ersten Schwinghebels (46) in der entgegengesetzten Richtung um die jeweilige Drehachse (x₃) herum umgewandelt wird.

4. Vorrichtung nach Anspruch 3, wobei die Bewegungsübertragungs- und -umwandlungsmittel (32, 34, 38, 42, 44, 46, 48, 56, 58, 62, 64) ferner einen Nockenmechanismus (56, 58) umfassen, umfassend, als angetriebenes Element, eine Rolle (56), die an einem Ende des zweiten Schwinghebels (48) montiert ist, das demjenigen gegenüberliegt, das mit dem ersten Schwinghebel (46) verbunden ist, und, als antreibendes Element, einen Translationskörper (58), der eine geeignet geformte Nut (60) aufweist, in die die Rolle (56) in einer derartigen Weise eingreift, dass die horizontale Translationsbewegung des Translationskörpers (58) in eine oder die andere Richtung in eine vertikale Bewegung der Rolle (56) umgewandelt wird, wobei somit die Drehung des zweiten Schwinghebels (48) in eine oder die andere Richtung veranlasst wird.

5. Vorrichtung nach Anspruch 4, wobei die Bewegungsübertragungs- und -umwandlungsmittel (32, 34, 38, 42, 44, 46, 48, 56, 58, 62, 64) ferner einen Bewegungsumwandlungsmechanismus (62, 64) zum Umwandeln der sich drehenden Bewegung des Elektromotors in eine Translationsbewegung, insbesondere in einer Richtung parallel zu der Zuführrichtung, des translatierenden Körpers (58) umfassen.

6. Vorrichtung nach Anspruch 5, wobei der Bewegungsumwandlungsmechanismus (62, 64) eine Schraube (62), die durch den Elektromotor zur Drehung angetrieben wird, und eine Mutter (64), die mit der Schraube (62) kämmt und für eine Translation mit dem translatierenden Körper (58) antreibend verbunden ist, umfasst.

7. Vorrichtung nach einem der vorstehenden Ansprüche, wobei das untere Klemmelement (14) ein Paar (24) der im Wesentlichen V-förmige Sitze (24, 26) aufweist, die in einem Abstand voneinander entlang der Zuführrichtung eingerichtet sind, und wobei das obere Klemmelement (16) einen (26) der im Wesentlichen V-förmige Sitze (24, 26) aufweist, der in einer Zwischenposition entlang der Zuführrichtung in Bezug auf die Sitze (24) des unteren Klemmelements (14) eingerichtet ist.

## Revendications

1. Appareil destiné à l'alimentation automatique de barres (B) à une machine-outil, comprenant
un dispositif de poussée de barre permettant de pousser chaque fois une barre (B) à alimenter à une machine-outil dans une direction d'alimentation horizontale,
un dispositif de verrouillage (10) permettant de verrouiller en position la barre (B) à alimenter à la machine-outil afin de lui permettre d'être reprise par le dispositif de poussée de barre, ledit dispositif de verrouillage (10) comprenant un bras oscillant inférieur (18) et un bras oscillant supérieur (20) supportés en rotation pour une rotation autour d'axes horizontaux de rotation (x₁, x₂) respectifs, orientés parallèles l'un à l'autre et perpendiculaires à ladite direction d'alimentation, ainsi qu'une paire d'éléments de serrage inférieur et supérieur (14, 16), dont chacun a au moins un logement (24, 26) sensiblement en forme de V approprié pour recevoir la barre (B) et qui sont portés par le bras oscillant inférieur (18) et le bras oscillant supérieur (20), respectivement, de façon à être déplaçables l'un par rapport à l'autre entre une condition ouverte, dans laquelle ils ne viennent pas en prise avec la barre (B), et une condition fermée, dans laquelle ils viennent en prise avec la barre (B) en la verrouillant en position, et
un système d'actionnement agencé pour entraîner les bras oscillants inférieur et supérieur (18, 20) en rotation dans des directions opposées autour de leurs axes de rotation (x₁, x₂) respectifs d'une manière telle à amener chaque fois les éléments de serrage inférieur et supérieur (14, 16) à se déplacer en direction ou à l'écart l'un de l'autre, ledit système d'actionnement comprenant un moteur électrique et un moyen de transmission et de conversion de mouvement (32, 34, 38, 42, 44, 46, 48, 56, 58, 62, 64) interposé entre le moteur électrique et les bras oscillants inférieur et supérieur (18, 20),
dans lequel ledit moyen de transmission et de conversion de mouvement (32, 34, 38, 42, 44, 46, 48, 56, 58, 62, 64) comprend un premier jeu d'engrenages (32, 34, 36, 38) comportant une première roue dentée (32) reliée par entraînement pour une rotation avec ledit bras oscillant inférieur (18), une seconde roue dentée (34) reliée par entraînement pour une rotation avec le bras oscillant supérieur (20), et une paire de roues dentées intermédiaires (36, 38) interposées entre lesdites première et seconde roues dentées (32, 34) et s'engrenant les unes avec les autres, d'une manière telle que lesdites première et seconde roues dentées (32, 34) sont contraintes à se mettre en rotation dans des directions opposées l'une par rapport à l'autre.

2. Appareil selon la revendication 1, dans lequel lesdits moyens de transmission et de conversion de mouvement (32, 34, 38, 42, 44, 46, 48, 56, 58, 62, 64) comprennent en outre un second jeu d'engrenages (42, 44) comportant une roue dentée d'entrée (42) et une roue dentée de sortie (44) s'engrenant avec ladite première roue dentée (32) dudit premier jeu d'engrenages (32, 34, 36, 38).

3. Appareil selon la revendication 2, dans lequel lesdits moyens de transmission et de conversion de mouvement (32, 34, 38, 42, 44, 46, 48, 56, 58, 62, 64) comprennent en outre un mécanisme de levier (46, 48) comportant un premier levier oscillant (46), qui est supporté en rotation pour une rotation autour d'un axe de rotation horizontal (x₃) parallèle aux axes de rotation (x₁, x₂) des bras oscillants inférieur et supérieur (18, 20) et est relié pour une rotation avec la roue dentée d'entrée (42) dudit second jeu d'engrenages (42, 44), et un second levier oscillant (48), qui est supporté en rotation pour une rotation autour d'un axe de rotation horizontal (x₄) parallèle aux axes de rotation (x₁, x₂) des bras oscillants inférieur et supérieur (18, 20), lesdits premier et second leviers oscillants (46, 48) étant reliés (52, 54) l'un à l'autre au niveau d'extrémités adjacentes respectives, d'une manière telle qu'une rotation dudit second levier oscillant (48) dans une direction donnée autour de l'axe de rotation (x₄) respectif est convertie en une rotation dudit premier levier oscillant (46) dans la direction opposée autour de l'axe de rotation (xₛ) respectif.

4. Appareil selon la revendication 3, dans lequel lesdits moyens de transmission et de conversion de mouvement (32, 34, 38, 42, 44, 46, 48, 56, 58, 62, 64) comprennent en outre un mécanisme de came (56, 58) comprenant, en guise d'élément entraîné, un rouleau (56) monté au niveau d'une extrémité dudit second levier oscillant (48) opposée à celle reliée audit premier levier oscillant (46) et, en guise d'élément d'entraînement, un corps de translation (58) ayant une rainure (60) de forme appropriée dans laquelle le rouleau (56) vient en prise, d'une manière telle que le déplacement par translation horizontal du corps de translation (58) dans une direction ou l'autre est converti en un mouvement vertical du rouleau (56), amenant ainsi la rotation dudit second levier oscillant (48) dans une direction ou l'autre.

5. Appareil selon la revendication 4, dans lequel lesdits moyens de transmission et de conversion de mouvement (32, 34, 38, 42, 44, 46, 48, 56, 58, 62, 64) comprennent en outre un mécanisme de conversion de mouvement (62, 64) permettant de convertir le mouvement rotatif du moteur électrique en un mouvement de translation, en particulier dans une direction parallèle à ladite direction d'alimentation, du corps de translation (58).

6. Appareil selon la revendication 5, dans lequel ledit mécanisme de conversion de mouvement (62, 64) comprend une vis (62) entraînée en rotation par le moteur électrique et un écrou (64) s'engrenant avec la vis (62) et relié par entraînement pour une translation avec le corps de translation (58).

7. Appareil selon l'une quelconque des revendications précédentes, dans lequel l'élément de serrage inférieur (14) a une paire (24) desdits logements (24, 26) sensiblement en forme de V, qui sont agencés à une distance l'un de l'autre le long de ladite direction d'alimentation, et dans lequel l'élément de serrage supérieur (16) a l'un (26) desdits logements (24, 26) sensiblement en forme de V, qui est agencé dans une position intermédiaire, le long de ladite direction d'alimentation, par rapport aux logements (24) de l'élément de serrage inférieur (14).
